# EUROPEAN PATENT APPLICATION

(11) **EP 3 919 396 A1**
(43) Date of publication of application: **08.12.2021**
(21) Application number: 19913318.2
(22) Date of filing: 19.11.2019
(51) Int. Cl.: B65C 3/16, B65B 53/00, B65B 53/02

(54) **METHOD FOR MANUFACTURING CONTENT LIQUID CONTAINING BOTTLE**

(30) Priority: 31.01.2019 JP 2019016017
(71) Applicant: Yoshino Kogyosho Co., Ltd., Koto-ku Tokyo 136-8531 (JP)
(72) Inventor: YOSHINO Kei, Isehara-shi, Kanagawa 259-1103 (JP); SASADA Kanemitsu, Tokyo 136-8531 (JP); TOYODA Tamotsu, Tokyo 136-8531 (JP)
(74) Representative: Murgitroyd & Company
(86) International application number: PCT/JP2019/045330
(87) International publication number: WO 2020/158120

(57) **Abstract**

A method of manufacturing a content liquid containing bottle comprises: a molding step of blow molding a preform (40) into a bottle (10) that includes a mouth portion (11), a shoulder portion (12) expanding in a direction away from the mouth portion (11), a barrel portion (13), and a bottom portion (14); a cap attachment step of attaching a cap (20) to the mouth portion (11) of the bottle (10) filled with a content liquid (L); and a label attachment step of placing a tubular shrink label (30) over outside of the bottle (10), and thermally shrinking the shrink label (30) to attach the shrink label (30) to the bottle (10), wherein in the label attachment step, the shrink label (30) is thermally shrunk in a state in which one end (31) of the shrink label (30) is located at a region of the shoulder portion (12) in which an inner surface is in contact with the content liquid (L).

## Description

### TECHNICAL FIELD

The present disclosure relates to a method of manufacturing a content liquid containing bottle formed by attaching a shrink label to a bottle filled with a content liquid.

### BACKGROUND

As containers for containing, as contents liquids, seasonings such as soy sauce and sauces, soft drinks such as tea and juice, toiletries such as shampoos and hair conditioners, and liquid detergents, bottles made of a synthetic resin material such as polypropylene (PP) resin or polyethylene terephthalate (PET) resin are often used. Such a bottle has a shape including a mouth portion, a shoulder portion that expands in a direction away from the mouth portion, a barrel portion, and a bottom portion. After the bottle is filled with a content liquid, a shrink label carrying information such as a trade name is usually attached to a region from the shoulder portion to the barrel portion to obtain a content liquid containing bottle.

For example, the content liquid containing bottle can be manufactured in the following manner: A synthetic resin-made preform formed in a bottomed tubular shape by injection molding is blow molded to form a bottle, and the molded bottle is filled with a content liquid through the mouth portion. After this, a cap is attached to the mouth portion to close the bottle, and then a shrink label is attached to a region from the shoulder portion to the barrel portion of the bottle. Alternatively, the content liquid containing bottle can be manufactured in the following manner: A synthetic resin-made preform is blow molded using, as a pressurized medium, a liquid that is a content liquid, to form a content liquid containing bottle. A cap is attached to the mouth portion to close the bottle, and then a shrink label is attached to a region from the shoulder portion to the barrel portion of the bottle.

In such content liquid containing container manufacturing method, the shrink label is typically attached to the bottle by a method whereby the cylindrical shrink label is placed over the outside of the region from the shoulder portion to the barrel portion of the bottle to which the cap is attached so as to surround the region, and, in this state, the shrink label is heated by hot air or the like to be thermally shrunk, thus tightly fixing the shrink label to the outer peripheral surface of the bottle (for example, see PTL 1).

### CITATION LIST

### Patent Literature

PTL 1: JP 2006-1573 A

### SUMMARY

### (Technical Problem)

In the foregoing conventional content liquid containing container manufacturing method, the shrink label is thermally shrunk to be attached to the bottle in a state in which the upper end of the shrink label is located above (i.e. higher than) the liquid surface of the content liquid located at the shoulder portion of the bottle. Accordingly, when thermally shrinking the shrink label, the region of the air layer not filled with the content liquid in the shoulder portion of the bottle and the region of the liquid layer filled with the content liquid in the shoulder portion of the bottle are heated by hot air. Here, since the region of the air layer has lower heat capacity than the region of the liquid layer in the shoulder portion, the temperature of the shoulder portion increases more in the region of the air layer than in the region of the liquid layer. If the amount of heat applied to the shrink label is increased to increase the shrinkage rate of the shrink label depending on, for example, the shape of the shoulder portion, the temperature difference between the air layer and the liquid layer of the shoulder portion increases, and the difference in thermal shrinkage between the air layer and the liquid layer may cause a sink mark (depression) to form at the boundary between the air layer and the liquid layer of the shoulder portion of the bottle. This problem is particularly noticeable in the case where the bottle is thin-walled.

This problem might be solved by thermally shrinking the shrink label in such temperature setting that does not cause a sink mark to form in the shoulder portion of the bottle. In this case, however, there is a possibility that the shrinkage of the shrink label is insufficient in the upper end part of the shrink label where the shrinkage is supposed to be greatest, and the shrink label is wrinkled in this region and the appearance of the bottle is impaired.

It could therefore be helpful to provide a method of manufacturing a content liquid containing bottle with which the appearance of the content liquid containing bottle can be improved by suppressing the wrinkling of the shrink label while preventing the formation of a sink mark in the shoulder portion of the bottle.

### (Solution to Problem)

A method of manufacturing a content liquid containing bottle according to the present disclosure comprises: a molding step of blow molding a synthetic resin-made preform into a bottle that includes a mouth portion, a shoulder portion expanding in a direction away from the mouth portion, a barrel portion, and a bottom portion; a cap attachment step of attaching a cap to the mouth portion of the bottle filled with a content liquid; and a label attachment step of placing a tubular shrink label over outside of the bottle to which the cap is attached, and thermally shrinking the shrink label to attach the shrink label to the bottle, wherein in the label attachment step, the shrink label is thermally shrunk in a state in which one end of the shrink label is located at a region of the shoulder portion in which an inner surface is in contact with the content liquid.

Preferably, in the method of manufacturing a content liquid containing bottle according to the present disclosure, the content liquid with which the bottle is filled has high viscosity, the content liquid having high viscosity is caused to adhere to the inner surface of the shoulder portion above a liquid surface of the content liquid, in a state in which the bottle is in an upright position, and in the label attachment step, the shrink label is thermally shrunk in a state in which the end of the shrink label is located at a region of the shoulder portion in which the content liquid having high viscosity adheres to the inner surface.

Preferably, in the method of manufacturing a content liquid containing bottle according to the present disclosure, in the label attachment step, the shrink label is thermally shrunk in a state in which the bottle is in an upright position and the end of the shrink label is located at a region of the shoulder portion below a liquid surface of the content liquid.

Preferably, in the method of manufacturing a content liquid containing bottle according to the present disclosure, in the label attachment step, a region of the shoulder portion above the end of the shrink label is covered with a cover member.

Preferably, in the method of manufacturing a content liquid containing bottle according to the present disclosure, in the label attachment step, the shrink label is thermally shrunk in a state in which the bottle is in an inverted position.

Preferably, in the method of manufacturing a content liquid containing bottle according to the present disclosure, in the molding step, the preform is blow molded using, as a pressurized medium, a liquid that is the content liquid.

### (Advantageous Effect)

It is thus possible to provide a method of manufacturing a content liquid containing bottle with which the appearance of the content liquid containing bottle can be improved by suppressing the wrinkling of the shrink label while preventing the formation of a sink mark in the shoulder portion of the bottle.

### BRIEF DESCRIPTION OF THE DRAWINGS

In the accompanying drawings:
FIG. 1 is a front view of a content liquid containing bottle manufactured by a method of manufacturing a content liquid containing bottle according to one of the disclosed embodiments;
FIG. 2 is a front view of a preform that is molded into the bottle illustrated in FIG. 1;
FIG. 3A is an explanatory diagram illustrating a procedure of molding the preform illustrated in FIG. 2 into a bottle by blow molding using a liquid as a pressurized medium and providing a headspace inside the bottle in a molding step;
FIG. 3B is an explanatory diagram illustrating the procedure of molding the preform illustrated in FIG. 2 into a bottle by blow molding using a liquid as a pressurized medium and providing a headspace inside the bottle in a molding step;
FIG. 3C is an explanatory diagram illustrating the procedure of molding the preform illustrated in FIG. 2 into a bottle by blow molding using a liquid as a pressurized medium and providing a headspace inside the bottle in a molding step;
FIG. 4 is a front view of the bottle with a cap attached to its mouth portion;
FIG. 5 is an explanatory diagram illustrating the positional relationship between a shrink label before shrinkage and the bottle in a label attachment step;
FIG. 6 is an explanatory diagram illustrating how the shrink label is thermally shrunk by hot air and attached to the bottle in the label attachment step;
FIG. 7 is an explanatory diagram illustrating a state in which the bottle formed by blow molding the preform is filled with a content liquid;
FIG. 8 is a front view of the bottle illustrated in FIG. 7 in a state in which the cap is attached to the mouth portion;
FIG. 9 is an explanatory diagram illustrating the positional relationship between the shrink label before shrinkage and the bottle in a label attachment step according to a modification;
FIG. 10 is an explanatory diagram illustrating how the shrink label is thermally shrunk by hot air and attached to the bottle in the label attachment step according to the modification;
FIG. 11 is an explanatory diagram illustrating the positional relationship between the shrink label before shrinkage and the bottle in a label attachment step according to a modification in which the bottle is in an inverted position; and
FIG. 12 is an explanatory diagram illustrating how the shrink label is thermally shrunk by hot air and attached to the bottle in the label attachment step according to the modification in which the bottle is in an inverted position.

### DETAILED DESCRIPTION

The presently disclosed technique will be described in more detail below, with reference to the drawings.

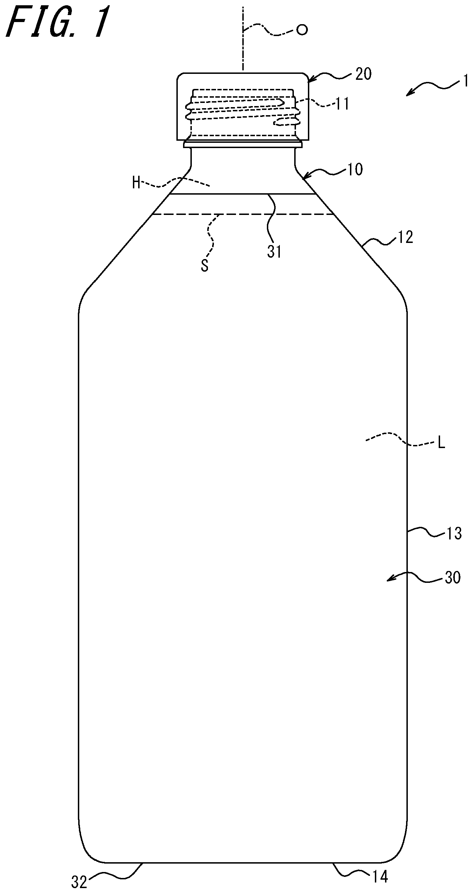

A content liquid containing bottle 1 illustrated in FIG. 1 is manufactured by a method of manufacturing a content liquid containing bottle according to one of the disclosed embodiments, and includes a bottle 10 containing a content liquid, a cap 20, and a shrink label 30.

Herein, the vertical direction (up-down direction) of the content liquid containing bottle 1 denotes the vertical direction in a state in which the content liquid containing bottle 1 is in an upright position as illustrated in FIG. 1.

The bottle 10 is a blow-molded container made of polypropylene (PP) resin, and has a shape including: an approximately cylindrical mouth portion 11; a shoulder portion 12 integrally connected to the lower end of the mouth portion 11 and gradually increasing in diameter in a direction away from the mouth portion 11 in an approximately truncated conical shape; an approximately cylindrical barrel portion 13 integrally connected to the lower end of the shoulder portion 12; and a bottom portion 14 integrally connected to the lower end of the barrel portion 13 and closing the lower end of the barrel portion 13. In FIG. 1, sign O denotes a common axis of the mouth portion 11, the shoulder portion 12, the barrel portion 13, and the bottom portion 14.

The bottle 10 is filled with a content liquid L to contain the content liquid L. The bottle 10 has a headspace H for containing gas such as air or nitrogen above the liquid surface S of the content liquid L. The liquid surface S of the content liquid L is located at the shoulder portion 12 of the bottle 10.

The content liquid L may be of any of various types. In this embodiment, the content liquid L is, for example, a high-viscosity liquid such as a sauce or a shampoo. Herein, "high-viscosity liquid" denotes a liquid having a viscosity of 100 mPa·s or more. The upper limit of the viscosity of the high-viscosity liquid applicable in this embodiment is 2000 Pa·s, which is the limit value of viscosity within which blow molding can be performed using the liquid as a pressurized medium. That is, in this embodiment, the viscosity of the high-viscosity content liquid L contained in the bottle 10 is in a range of 100 mPa·s to 2000 Pa·s.

The cap 20 is formed of a synthetic resin material in a topped cylindrical shape, and attached to the mouth portion 11 of the bottle 10 by screw connection to close the mouth portion 11.

The cap 20 is not limited to being attached to the mouth portion 11 by screw connection, and may be attached to the mouth portion 11 by other means such as undercut engagement (capping). The cap 20 may include a discharge tube, a discharge pump, or the like for discharging the content liquid, as long as the cap 20 can be attached to the mouth portion 11 to close the mouth portion 11.

The shrink label 30 is formed of a thermally shrinkable synthetic resin material, such as polystyrene (PS) resin or polyethylene terephthalate (PET) resin, in a film shape. The shrink label 30 is shaped like a tube slightly larger in diameter than the barrel portion 13, and thermally shrunk in a state of being placed over the outside of the part of the bottle 10 from the shoulder portion 12 to the bottom portion 14 via the barrel portion 13, to be attached to the outer surface of the bottle 10 in a tightly fixed state. For example, the shrink label 30 may carry information about the content liquid L.

The upper end 31 of the shrink label 30 is located at the part of the shoulder portion 12 of the bottle 10 above (i.e. higher than) the liquid surface S of the content liquid L. The lower end 32 of the shrink label 30 is located on the surface of the bottom portion 14 facing downward. The lower end 32 of the shrink label 30 may be located at the barrel portion 13.

How the content liquid containing bottle 1 having the above-described structure is manufactured by the method of manufacturing a content liquid containing bottle according to one of the disclosed embodiments will be described below.

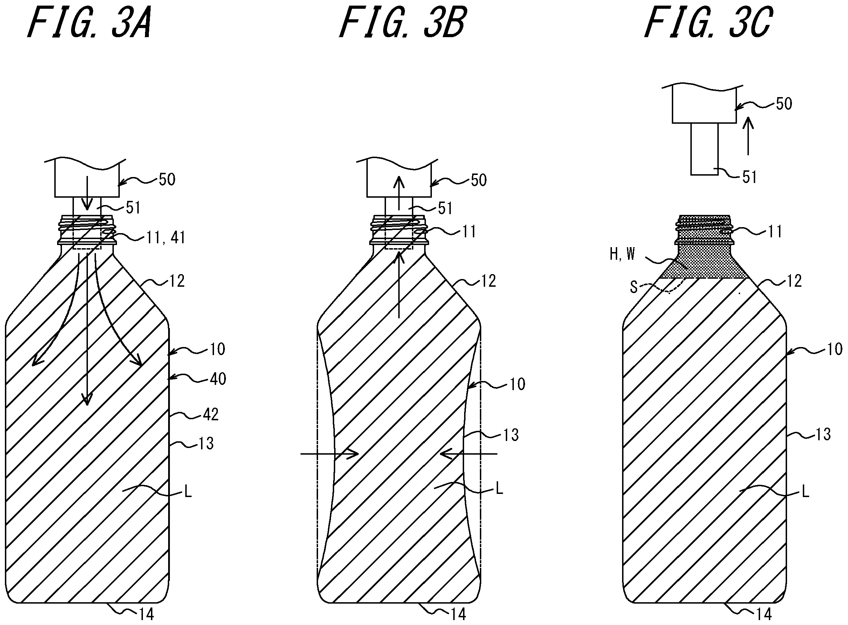

In FIGS. 3A to 12, the part of the bottle 10 in which the content liquid L is contained is designated by hatching for convenience's sake.

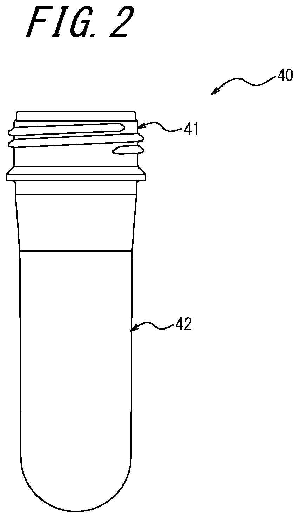

First, a preform 40 for blow molding illustrated in FIG. 2 is prepared. The preform 40 is made of the same synthetic resin as the bottle 10, that is, polypropylene (PP) resin. The polypropylene (PP) resin is injection molded to form the preform 40 in a bottomed tubular shape including a mouth portion 41 having the same shape as the mouth portion 11 of the bottle 10 and a stretch portion 42 integrally connected to the lower end of the mouth portion 41 and having an approximately test tube shape.

Next, in a molding step, the preform 40 is blow molded into the bottle 10 of the above-described shape. The blow molding used in this embodiment is liquid blow molding that involves blow molding the preform 40 using, as a pressurized medium, the liquid that is the content liquid L contained in the bottle 10.

In the liquid blow molding, the preform 40 heated to a predetermined temperature beforehand is placed in a mold for blow molding (not illustrated), a nozzle 51 of a pressurized liquid supply device 50 is liquid-tightly fitted into the mouth portion 41 of the preform 40, and the pressurized liquid (content liquid) L is supplied into the preform 40 through the nozzle 51 to stretch the stretch portion 42 in the axial direction and the radial direction by the pressure of the liquid L and mold it in a shape along the inner surface of the mold, as illustrated in FIG. 3A. In this way, the bottle 10 of the shape including the mouth portion 11, the shoulder portion 12, the barrel portion 13, and the bottom portion 14 can be molded.

The liquid L supplied into the preform 40 as the pressurized medium is a high-viscosity liquid having a viscosity of 100 mPa·s or more, as mentioned above. The viscosity of the liquid L is, however, 200 Pa·s or less, so that the liquid L can be used for the liquid blow molding.

In the molding step, the liquid blow molding may be performed by supplying the pressurized liquid into the preform 40 while stretching the stretch portion 42 of the preform 40 in the axial direction by a stretching rod provided in the pressurized liquid supply device 50.

The bottle 10 formed by the liquid blow molding is in a state of being fully filled with the content liquid L. Hence, after the liquid blow molding, a step of discharging a predetermined amount of the content liquid L from inside the bottle 10 is performed to form the headspace H inside the bottle 10. For example, the step of discharging the predetermined amount of the content liquid L from inside the bottle 10 may be a suck back step using the pressurized liquid supply device 50.

In the suck back step, the pressurized liquid supply device 50 is operated in the reverse direction in a state in which the nozzle 51 remains inserted in the mouth portion 11 of the molded bottle 10, as illustrated in FIG. 3B. As a result, the predetermined amount of the content liquid L is sucked from the inside of the molded bottle 10 back to the pressurized liquid supply device 50 through the nozzle 51, and thus discharged from the inside of the bottle 10 to the outside. Here, since the nozzle 51 is liquid-tightly fitted into the mouth portion 11, the inside of the bottle 10 is at negative pressure. The bottle 10 is consequently in a state of being dented in the barrel portion 13 and the like so as to reduce the internal capacity by the volume of the content liquid L discharged.

Next, the nozzle 51 is separated from the mouth portion 11, and outside air is introduced into the bottle 10 through the mouth portion 11, as illustrated in FIG. 3C. Once the outside air has been introduced into the bottle 10, the barrel portion 13 of the bottle 10 returns to the original shape, the liquid surface S of the content liquid L lowers to the shoulder portion 12, and the headspace H is formed above the liquid surface S inside the bottle 10.

Since the content liquid L has high viscosity, the content liquid L adhering to the whole inner surface of the shoulder portion 12 of the bottle 10 in the molding step or the suck back step remains adhering to the whole inner surface of the shoulder portion 12 above the liquid surface S of the content liquid L where the headspace H is formed, even after the liquid surface S of the content liquid L lowers to the shoulder portion 12 and the headspace H is formed inside the bottle 10. That is, in the case where the bottle 10 is formed by performing blow molding using the high-viscosity liquid L as the pressurized medium, the high-viscosity content liquid L adheres to the inner surface of the shoulder portion 12 above the liquid surface S of the content liquid L in a state in which the bottle 10 is in an upright position. The region of the inner surface of the shoulder portion 12 to which the high-viscosity content liquid L adheres is a wet region W in which the inner surface of the shoulder portion 12 is in contact with the content liquid L and is wet by the content liquid L. In FIGS. 3C and 4 to 6, the wet region W in the shoulder portion 12 of the bottle 10 is designated by halftone dots for convenience's sake. As long as the content liquid L is maintained in a state of adhering to the whole inner surface of the shoulder portion 12 above the liquid surface S, the liquid surface S of the content liquid L contained in the bottle 10 may be located at the barrel portion 13 instead of the shoulder portion 12.

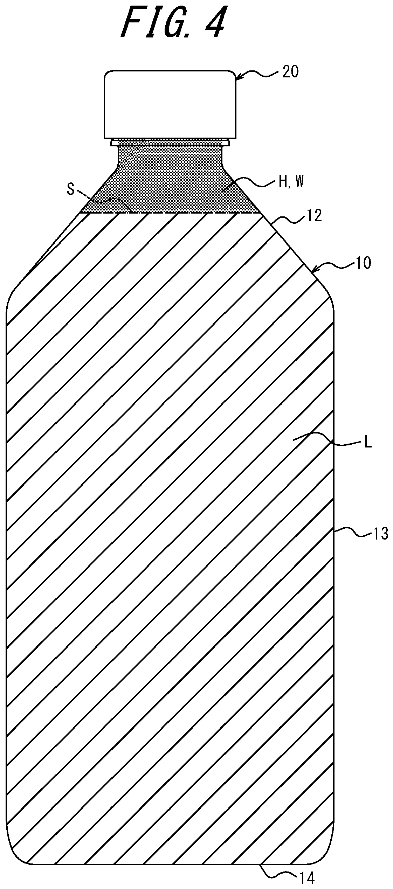

Next, in a cap attachment step, the cap 20 is attached to the mouth portion 11 of the bottle 10 filled with the content liquid L to close the bottle 10, as illustrated in FIG. 4. Even after the mouth portion 11 is closed by the cap 20, the shoulder portion 12 is maintained in a state of having the wet region W in which the high-viscosity content liquid L adheres to the inner surface above the liquid surface S of the content liquid L.

Next, in a label attachment step, the shrink label 30 is attached to the bottle 10 having the cap 20 attached to the mouth portion 11.

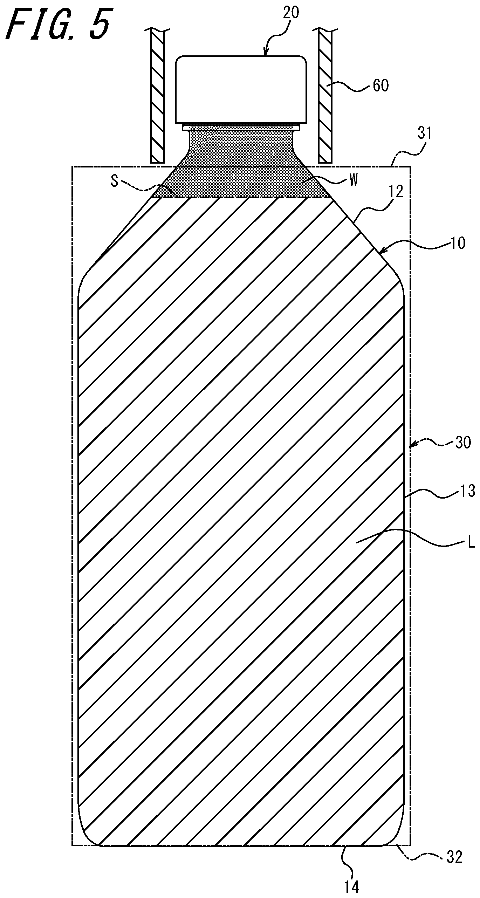

In the label attachment step, first, the shrink label 30 (designated by a dashed-two dotted line in FIG. 5) formed of a film of thermally shrinkable synthetic resin such as polystyrene (PS) resin or polyethylene terephthalate (PET) resin in a cylindrical shape is placed over the outside of the bottle 10, as illustrated in FIG. 5. As the shrink label 30, a film formed in a cylindrical shape beforehand may be placed over the outside of the bottle 10, or a sheetlike film unwound from a roll may be wrapped around the outer surface of the barrel portion 13 of the bottle 10 and formed in a cylindrical shape by, for example, bonding both ends.

In the label attachment step, in a state in which the bottle 10 is in an upright position, the upper end 31 of the shrink label 30 is located at the wet region W of the shoulder portion 12 that is above the liquid surface S of the content liquid L and in which the high-viscosity content liquid L adheres to the inner surface. That is, the shrink label 30 is placed so that its upper end 31 will be at a height within the range of the wet region W of the shoulder portion 12 while not in contact with the outer surface of the shoulder portion 12 before shrinkage and, when the shrink label 30 is thermally shrunk, come into contact with the outer surface of the shoulder portion 12 in the wet region W. Meanwhile, the lower end 32 of the shrink label 30 is located at the grounding part of the bottom portion 14. Thus, the shrink label 30 is placed to cover the region of the bottle 10 from the wet region W of the shoulder portion 12 to the bottom portion 14 via the barrel portion 13. The lower end 32 of the shrink label 30 may be located below (i.e. lower than) the bottom portion 14.

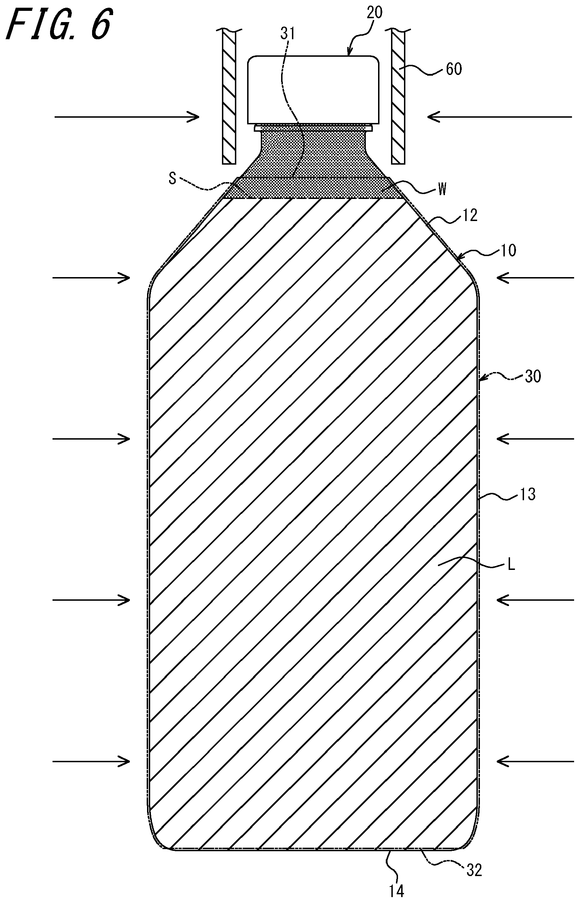

After placing the shrink label 30 at the above-described position, hot air is applied to the shrink label 30 from radially outside using a hot air transmission device or the like to thermally shrink the shrink label 30 and thus bring the whole shrink label 30 into close contact with the outer surface of the bottle 10, as illustrated in FIG. 6. Here, hot air may be sprayed to the region between the upper end 31 and the lower end 32 of the shrink label 30, and not to the region above the upper end 31 of the shrink label 30. In this way, the shrink label 30 is attached to the bottle 10. The label attachment step of thermally shrinking the shrink label 30 to attach the shrink label 30 to the bottle 10 is performed while the shoulder portion 12 maintains the wet region W in which the high-viscosity content liquid L adheres to the inner surface above the liquid surface S of the content liquid L.

The method of thermally shrinking the shrink label 30 is not limited to applying hot air to the shrink label 30, and may be any of various methods. Examples include applying heated steam to the shrink label 30 instead of hot air, and directly heating the shrink label 30 by a heat source such as a heater. In this case, a method of passing the shrink label 30 through a shrink tunnel including a means of transmitting hot air or steam or a heat source such as a heater may be used.

Although hot air is applied to the shrink label 30 in the radial direction in this embodiment, hot air or heated steam may be applied from a plurality of outlets to the shrink label 30 in the circumferential direction. With this method, the bottle 10 is prevented from being heated while sufficiently heating the shrink label 30, so that the bottle 10 can be prevented from being thermally deformed even in the case where the bottle 10 is thin-walled.

The upper end 31 of the shrink label 30 thermally shrunk and attached to the bottle 10 in the label attachment step is located at the wet region W of the shoulder portion 12 of the bottle 10 above the liquid surface S of the content liquid L. Thus, in this embodiment, in a state in which the bottle 10 is in an upright position, the wet region W in which the content liquid L adheres to the inner surface above the liquid surface S of the content liquid L is provided, and the shrink label 30 is thermally shrunk in a state in which the upper end 31 of the shrink label 30 is located at the wet region W. Hence, when thermally shrinking the shrink label 30 in a state in which the upper end 31 of the shrink label 30 is located above the liquid surface S of the content liquid L, the wet region W of the shoulder portion 12 above the liquid surface S is heated, so that the parts of the shoulder portion 12 bordering the liquid surface S can be kept from differing in temperature increase. The formation of a sink mark (depression) caused by a difference in thermal shrinkage can thus be prevented in the parts of the shoulder portion 12 bordering the liquid surface S. Moreover, since the parts of the shoulder portion 12 bordering the liquid surface S can be kept from differing in temperature increase, the heating temperature can be increased to further shrink the upper end 31 of the shrink label 30. Therefore, the appearance of the content liquid containing bottle 1 in which the shrink label 30 is attached to the bottle 10 can be improved by suppressing the wrinkling of the shrink label 30 at the shoulder portion 12 while preventing the formation of a sink mark (depression) in the shoulder portion 12 of the bottle 10 as mentioned above.

With the above-described method of manufacturing a content liquid containing bottle, a high-viscosity liquid is used as the content liquid L, so that the formation of a sink mark in the shoulder portion 12 can be prevented while the upper end 31 of the shrink label 30 is located above the liquid surface S of the content liquid L. Accordingly, the appearance of the bottle 10 to which the shrink label 30 is attached can be further improved by, for example, covering the liquid surface S with the shrink label 30.

In the label attachment step, the region of the shoulder portion 12 above the upper end of the shrink label 30 is preferably covered with a cover member 60 made of a heat insulating material as an example. The cover member 60 may have a cylindrical shape and cover the region of the shoulder portion 12 above the upper end of the shrink label 30 together with the cap 20 attached to the mouth portion 11 on the whole circumference. The cover member 60 may have any of various shapes that can cover the region of the shoulder portion 12 above the upper end of the shrink label 30. The wet region W of the shoulder portion 12 may be not covered with the cover member 60.

In the label attachment step, by covering the region of the shoulder portion 12 above the upper end 31 of the shrink label 30 with the cover member 60, the heating of the part of the shoulder portion 12 above the upper end of the shrink label 30 and the air inside the headspace H can be prevented or reduced. Consequently, the difference in temperature increase between the parts of the shoulder portion 12 bordering the liquid surface S can be reduced more effectively. The formation of a sink mark in the shoulder portion 12 can thus be suppressed more reliably.

The above-described method of manufacturing a content liquid containing bottle is effective for manufacturing the content liquid containing bottle 1 having the bottle 10 and the shrink label 30 that satisfy the relational expression "Y ≥ 71.542 × ln(X) + 91.125", where Y (%) is the shrinkage rate of the shrink label 30 and X (mm) is the average wall thickness of the shoulder portion 12 of the bottle 10 at the middle height position. Here, the shrinkage rate Y (%) of the shrink label 30 is calculated according to Y = ((D1 - D2)/D1) × 100, where D1 is the diameter of the shrink label 30 before the shrinkage and D2 is the diameter of the shrink label 30 in the maximum shrunk part after the shrinkage. By using the method of manufacturing a content liquid containing bottle according to this embodiment to manufacture the content liquid containing bottle 1 having the bottle 10 and the shrink label 30 that satisfy the foregoing relational expression, even in the case where the bottle 10 in the content liquid containing bottle 1 is thin-walled, the formation of a sink mark in the shoulder portion 12 of the thin-walled bottle 10 can be suppressed reliably.

In this embodiment, liquid blow molding the preform 40 can create the wet region W in which the content liquid L adheres to the inner surface of the shoulder portion 12 of the bottle 10 formed. In the case of forming the bottle 10 by blow molding using gas such as air as a pressurized medium, on the other hand, after filling the bottle 10 with the high-viscosity content liquid L and closing the mouth portion 11 by the cap 20, for example, the bottle 10 may be shaken up and down to cause the high-viscosity content liquid L to adhere to the inner surface of the shoulder portion 12 above the liquid surface S and thus create the wet region W.

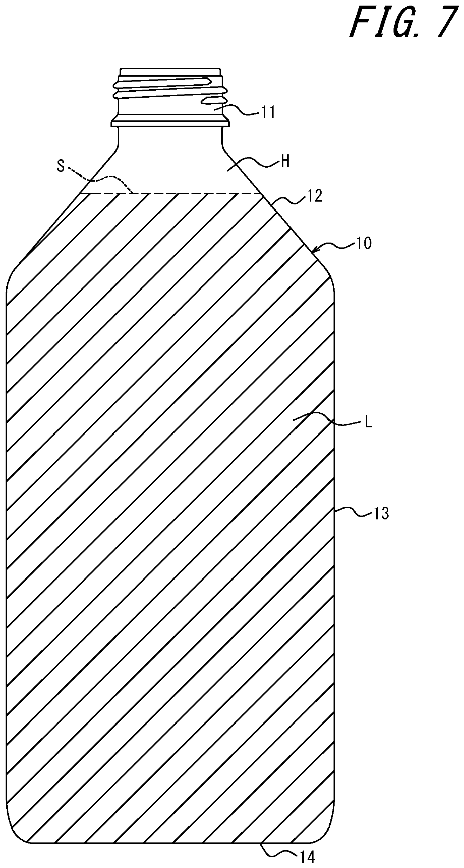

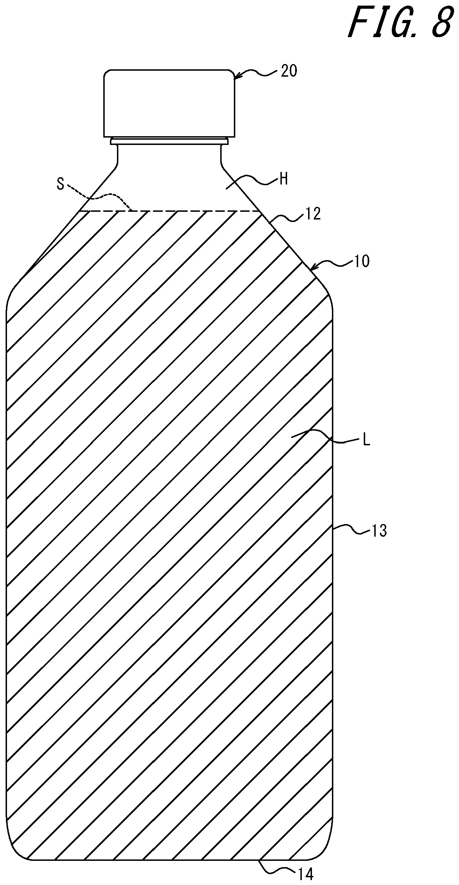

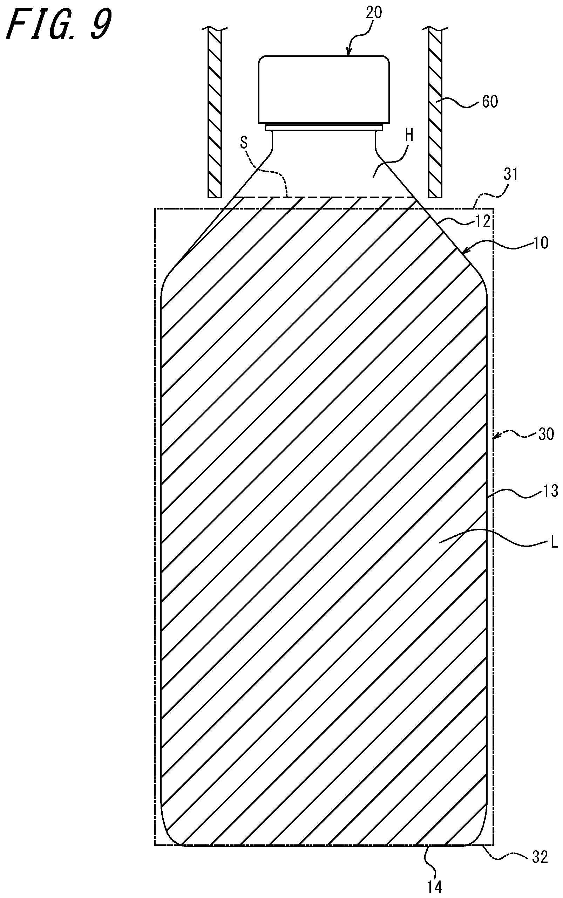

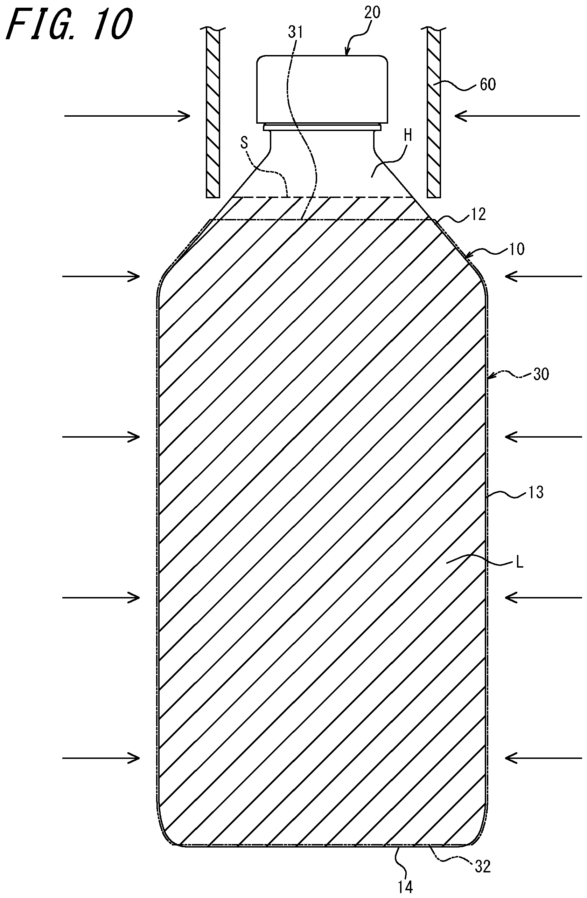

FIG. 7 is an explanatory diagram illustrating a state in which the bottle formed by blow molding the preform is filled with the content liquid. FIG. 8 is a front view of the bottle illustrated in FIG. 7 in a state in which the cap is attached to the mouth portion. FIG. 9 is an explanatory diagram illustrating the positional relationship between the shrink label before the shrinkage and the bottle in a label attachment step according to a modification. FIG. 10 is an explanatory diagram illustrating how the shrink label is thermally shrunk by hot air and attached to the bottle in the label attachment step according to the modification. In FIGS. 7 to 10, the members corresponding to the those described above are given the same reference signs.

The method of manufacturing a content liquid containing container according to this embodiment can also be used to manufacture the content liquid containing bottle 1 containing a non-high-viscosity liquid of less than 100 mPa·s in viscosity as the content liquid L. A method of manufacturing the content liquid containing bottle 1 containing a non-high-viscosity liquid of less than 100 mPa·s in viscosity as the content liquid L will be described below.

First, in a molding step, the preform 40 of the same shape as in FIG. 2 is blow molded to form the bottle 10. The bottle 10 may be formed by liquid blow molding the preform 40 using, as a pressurized medium, the liquid that is the content liquid L as in the case of the content liquid containing bottle 1 illustrated in FIG. 1, or formed by blow molding the preform 40 using gas such as air as a pressurized medium. In the case where the bottle 10 is formed by blow molding using gas such as air as a pressurized medium, the molded bottle 10 is filled with the content liquid L through the mouth portion 11.

In the case where the bottle 10 is formed by liquid blow molding using a low-viscosity (for example, less than 100 mPa·s in viscosity) content liquid as a pressurized medium, a wet region formed in the shoulder portion 12 tends to be eliminated in a short time. In the case where the bottle 10 is formed by blow molding using gas such as air as a pressurized medium and then filled with the content liquid L, the content liquid L does not adhere to the inner surface of the shoulder portion 12 above the liquid surface S during the filling. Accordingly, in the bottle 10 formed by each of these methods in an upright position, the headspace H is formed above the liquid surface S of the content liquid L located at the shoulder portion 12, but no wet region is formed in the inner surface of the shoulder portion 12 in the part that is located above the liquid surface S and in which the headspace H is provided, as illustrated in FIG. 7. In this case, the wet region W is not provided in the inner surface of the shoulder portion 12 of the bottle 10 above the liquid surface S, and a part of the shoulder portion 12 located below the liquid surface S and containing the content liquid L corresponds to the wet region W.

Next, in a cap attachment step, the cap 20 is attached to the mouth portion 11 of the bottle 10 filled with the content liquid L to close the bottle 10, as illustrated in FIG. 8. In the case where the content liquid L has low viscosity, even when the bottle 10 is shaken in a state in which the mouth portion 11 is closed by the cap 20, the content liquid L adhering to the shoulder portion 12 flows downward soon, and the wet region W is not provided in the inner surface of the shoulder portion 12 located above the liquid surface S.

Next, in a label attachment step, the shrink label 30 is attached to the bottle 10 having the cap 20 attached to the mouth portion 11.

As illustrated in FIG. 9, in the label attachment step, the shrink label 30 (designated by a dashed-two dotted line in FIG. 9) formed of a film of thermally shrinkable synthetic resin such as polystyrene (PS) resin or polyethylene terephthalate (PET) resin in a cylindrical shape is placed over the outside of the bottle 10, in the same way as in FIG. 5.

In the label attachment step according to the modification, in a state in which the bottle 10 is in an upright position, the upper end 31 of the shrink label 30 is located at a region of the shoulder portion 12 below the liquid surface S of the content liquid L (i.e. a region of the shoulder portion 12 in which the inner surface is contact with the content liquid L and that corresponds to the wet region W). That is, the shrink label 30 is placed so that its upper end 31 will be at a height within the range of the region of the shoulder portion 12 below the liquid surface S while not in contact with the outer surface of the shoulder portion 12 before shrinkage and, when the shrink label 30 is thermally shrunk, come into contact with the outer surface of the shoulder portion 12 in the region below the liquid surface S. Meanwhile, the lower end 32 of the shrink label 30 is located at the grounding part of the bottom portion 14. Thus, the shrink label 30 is placed to cover the region of the bottle 10 from the region of the shoulder portion 12 below the liquid surface S to the bottom portion 14 via the barrel portion 13.

After placing the shrink label 30 at the above-described position, as illustrated in FIG. 10, hot air is applied to the region between the upper end 31 and the lower end 32 of the shrink label 30 to thermally shrink the shrink label 30 and thus bring the whole shrink label 30 into close contact with the outer surface of the bottle 10, as in FIG. 6. In this way, the shrink label 30 is attached to the bottle 10.

Thus, in the label attachment step according to the modification, too, the upper end 31 of the shrink label 30 thermally shrunk and attached to the bottle 10 is located at the region of the shoulder portion 12 of the bottle 10 in which the inner surface below the liquid surface S of the content liquid L is in contact with the content liquid L and wet. The whole part of the shrink label 30 located at the shoulder portion 12 is therefore attached to the region of the shoulder portion 12 in which the inner surface is in contact with the content liquid L and wet. Accordingly, when thermally shrinking the shrink label 30, the wrinkling of the shrink label 30 is suppressed while preventing the formation of a sink mark in the shoulder portion 12, so that the appearance of the content liquid containing bottle 1 in which the shrink label 30 is attached to the bottle 10 can be improved.

In the label attachment step according to the modification, too, by covering the region of the shoulder portion 12 above the upper end 31 of the shrink label 30 with the cover member 60, the heating of the part of the shoulder portion 12 above the upper end 31 of the shrink label 30 and the air inside the headspace H can be prevented or reduced, as in FIG. 6. Consequently, a difference in temperature increase in the shoulder portion 12 can be prevented more effectively. The formation of a sink mark in the shoulder portion 12 can thus be suppressed more reliably.

The label attachment step according to the modification illustrated in FIGS. 9 and 10 may be also used for the bottle 10 filled with the high-viscosity content liquid L.

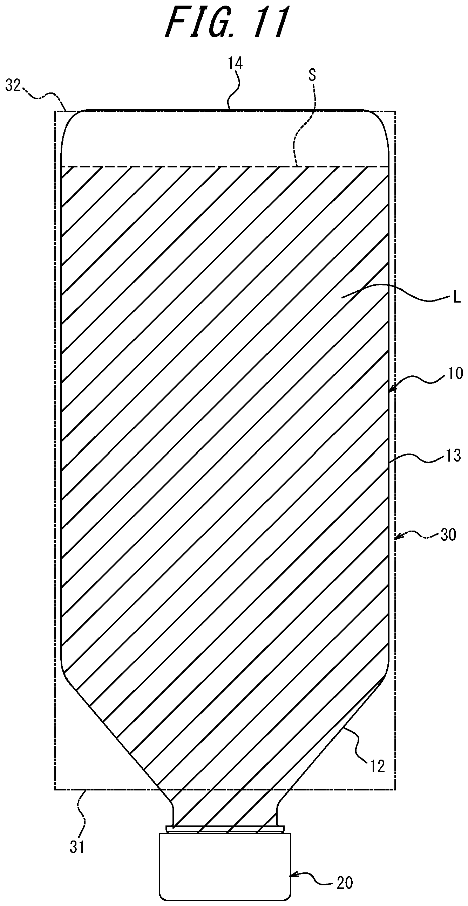

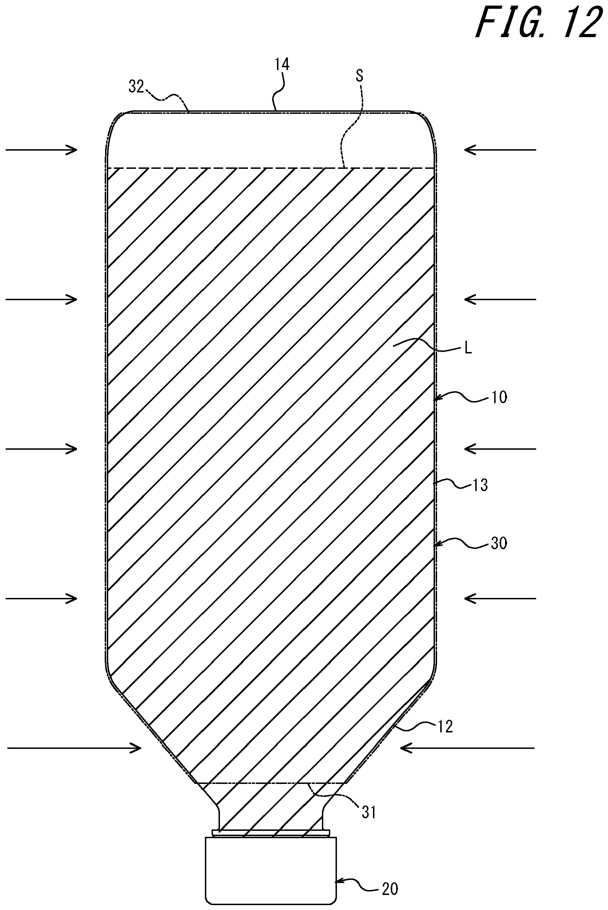

FIG. 11 is an explanatory diagram illustrating the positional relationship between the shrink label before the shrinkage and the bottle in a label attachment step according to a modification in which the bottle is in an inverted position. FIG. 12 is an explanatory diagram illustrating how the shrink label is thermally shrunk by hot air and attached to the bottle in the label attachment step according to the modification in which the bottle is in an inverted position. In FIGS. 11 and 12, the members corresponding to the those described above are given the same reference signs.

In the label attachment step, the shrink label 30 may be thermally shrunk in a state in which the bottle 10 that contains the content liquid L and whose mouth portion 11 is closed by the cap 20 is in an inverted position, as illustrated in FIGS. 11 and 12.

In the label attachment step according to this modification, the whole inner surface of the shoulder portion 12 of the bottle 10 in an inverted position is in contact with the content liquid L, as illustrated in FIG. 11. Hence, the upper end 31 (indicated as the lower end in FIGS. 11 and 12) of the shrink label 30 located at the shoulder portion 12 is located at a region of the shoulder portion 12 in which the inner surface is in contact with the content liquid L and wet.

Therefore, as illustrated in FIG. 12, by heating the region between the upper end 31 and the lower end 32 of the shrink label 30 and thermally shrinking the shrink label 30 to bring the whole shrink label 30 into close contact with the outer surface of the bottle 10 in a state in which the upper end 31 of the shrink label 30 is located at the shoulder portion 12 as in FIG. 6, the whole part of the shrink label 30 located at the shoulder portion 12 can be attached to the region of the shoulder portion 12 in which the inner surface is in contact with the content liquid L and that corresponds to the wet region W. In this way, when thermally shrinking the shrink label 30, the wrinkling of the shrink label 30 is suppressed while preventing the formation of a sink mark in the shoulder portion 12, so that the appearance of the content liquid containing bottle 1 in which the shrink label 30 is attached to the bottle 10 can be improved.

In the label attachment step according to this modification, by a simple operation of merely inverting the bottle 10 whose mouth portion 11 is closed by the cap 20, the upper end 31 of the shrink label 30 located at the shoulder portion 12 can be situated at the wet region of the shoulder portion 12 in which the inner surface is in contact with the content liquid L. This eases the manufacture of the content liquid containing bottle 1 with improved appearance. In the label attachment step according to this modification, an air layer is formed on the bottom portion 14 side of the bottle 10. In this part, however, the shrink label 30 shrinks less than on the shoulder portion 12 side, and also is not heated as much as on the shoulder portion 12 side. Accordingly, such a sink mark that would occur in the shoulder portion 12 is unlikely to occur.

The present disclosure is not limited to the foregoing embodiments, and various changes can be made without departing from the scope of the present disclosure.

For example, although the shoulder portion 12 of the bottle 10 has an approximately truncated conical shape in the foregoing embodiments, the present disclosure is not limited to such. The shape of the shoulder portion 12 may be any other shape that gradually expands in a direction away from the mouth portion 11 toward the barrel portion, such as an approximately truncated pyramidal shape or an approximately dome shape. The shapes of the mouth portion 11, the barrel portion 13, and the bottom portion 14 may also be varied.

Although the bottle 10 and the preform 40 are made of polypropylene (PP) resin in the foregoing embodiments, the present disclosure is not limited to such. For example, the bottle 10 and the preform 40 may be made of any other synthetic resin such as polyethylene terephthalate (PET) resin.

The structure, method, etc. for causing the content liquid L to be in contact with or adhere to the inner surface of the shoulder portion 12 may be also varied, as long as the shrink label 30 is thermally shrunk in a state in which the upper end 31 of the shrink label 30 is located at a region of the shoulder portion 12 in which the inner surface is in contact with the content liquid L in the label attachment step.

### REFERENCE SIGNS LIST

- 1: content liquid containing bottle
- 10: bottle
- 11: mouth portion
- 12: shoulder portion
- 13: barrel portion
- 14: bottom portion
- 20: cap
- 30: shrink label
- 31: upper end
- 32: lower end
- 40: preform
- 41: mouth portion
- 42: stretch portion
- 50: pressurized liquid supply device
- 51: nozzle
- 60: cover member
- O: axis
- L: content liquid (liquid)
- S: liquid surface
- H: headspace
- W: wet region

## Claims

1. A method of manufacturing a content liquid containing bottle, the method comprising:
a molding step of blow molding a synthetic resin-made preform into a bottle that includes a mouth portion, a shoulder portion expanding in a direction away from the mouth portion, a barrel portion, and a bottom portion;
a cap attachment step of attaching a cap to the mouth portion of the bottle filled with a content liquid; and
a label attachment step of placing a tubular shrink label over outside of the bottle to which the cap is attached, and thermally shrinking the shrink label to attach the shrink label to the bottle,
wherein in the label attachment step, the shrink label is thermally shrunk in a state in which one end of the shrink label is located at a region of the shoulder portion in which an inner surface is in contact with the content liquid.

2. The method of manufacturing a content liquid containing bottle according to claim 1, wherein the content liquid with which the bottle is filled has high viscosity,
the content liquid having high viscosity is caused to adhere to the inner surface of the shoulder portion above a liquid surface of the content liquid, in a state in which the bottle is in an upright position, and
in the label attachment step, the shrink label is thermally shrunk in a state in which the end of the shrink label is located at a region of the shoulder portion in which the content liquid having high viscosity adheres to the inner surface.

3. The method of manufacturing a content liquid containing bottle according to claim 1, wherein in the label attachment step, the shrink label is thermally shrunk in a state in which the bottle is in an upright position and the end of the shrink label is located at a region of the shoulder portion below a liquid surface of the content liquid.

4. The method of manufacturing a content liquid containing bottle according to any one of claims 1 to 3, wherein in the label attachment step, a region of the shoulder portion above the end of the shrink label is covered with a cover member.

5. The method of manufacturing a content liquid containing bottle according to claim 1, wherein in the label attachment step, the shrink label is thermally shrunk in a state in which the bottle is in an inverted position.

6. The method of manufacturing a content liquid containing bottle according to any one of claims 1 to 5, wherein in the molding step, the preform is blow molded using, as a pressurized medium, a liquid that is the content liquid.
